# EUROPÄISCHE PATENTSCHRIFT

(11) **EP 3 466 568 B1**
(45) Veröffentlichungstag und Bekanntmachung des Hinweises auf die Patenterteilung: **22.04.2026**
(21) Anmeldenummer: 18200653.6
(22) Anmeldetag: 08.06.2017
(51) Int. Cl.: B22F 12/00, B22F 12/50, B29C 64/153, B29C 64/259, B33Y 10/00, B33Y 30/00, B22F 3/00, B22F 10/28, B22F 10/32, B22F 12/57, B22F 12/86, B22F 12/88, B22F 12/90

(54) **ANLAGE ZUR ADDITIVEN HERSTELLUNG DREIDIMENSIONALER OBJEKTE**
INSTALLATION FOR ADDITIVE MANUFACTURING OF THREE-DIMENSIONAL OBJECTS
INSTALLATION DE PRODUCTION PAR MÉTHODE DE FABRICATON ADDITIVE D'OBJETS TRIDIMENSIONNELS

(30) Priorität: 14.11.2016 DE 102016121769
(43) Veröffentlichungstag der Anmeldung: 10.04.2019
(62) Teilanmeldung aus: 17175024.3
(73) Patentinhaber: Concept Laser GmbH, 96215 Lichtenfels (DE)
(72) Erfinder: Hetzel, Ralf, 96231 Bad Staffelstein (DE); Stammberger, Jens, 96472 Rödental (DE); Zeulner, Fabian, 96215 Lichtenfels (DE); Dr. Bechmann, Florian, 96215 Lichtenfels (DE); Hofmann, Alexander, 96260 Weismain (DE)
(74) Vertreter: Hafner & Kohl PartmbB

(56) Entgegenhaltungen:
- EP-A2- 1 704 989
- EP-A2- 1 961 514
- DE-A1- 102012 002 955
- DE-A1- 102014 016 718
- US-A1- 2004 003 741
- US-A1- 2007 288 123

## Beschreibung

Die Erfindung betrifft eine Anlage zur additiven Herstellung dreidimensionaler Objekte, umfassend eine oder mehrere Arbeitsstationen, welche Arbeitsstationen jeweils zur Durchführung wenigstens eines Arbeitsvorgangs im Rahmen der additiven Herstellung dreidimensionaler Objekte eingerichtet sind.

Anlagen zur additiven Herstellung dreidimensionaler Objekte sind dem Grunde nach bekannt. Entsprechende Anlagen umfassen typischerweise mehrere Arbeitsstationen, welche jeweils zur Durchführung wenigstens eines Arbeitsvorgangs im Rahmen der additiven Herstellung dreidimensionaler Objekte eingerichtet sind.

Bisweilen kann es notwendig sein, Pulvermodule, wie z. B. Baumodule, welche einen Bauraum begrenzen, in welchem der eigentliche additive Aufbau dreidimensionaler Objekte erfolgt, zwischen verschiedenen Arbeitsstationen einer Anlage zu befördern oder zwischenzulagern. Insbesondere ist eine automatisierbare bzw. automatisierte Möglichkeit der Beförderung und Zwischenlagerung von Pulvermodulen wünschenswert.

Der Erfindung liegt die Aufgabe zugrunde, eine, insbesondere im Hinblick auf die Möglichkeit einer automatisierbaren Beförderung und Zwischenlagerung von Pulvermodulen, verbesserte Anlage zur additiven Herstellung dreidimensionaler Objekte anzugeben.

DE 10 2014 016 718 A1 und DE 10 2012 002 955 A1 offenbaren jeweils Ausführungsformen additiver Fertigungseinrichtungen.

EP 1 704 989 A1 offenbart eine Vorrichtung und ein Verfahren zum Ausrichten einer entfernbaren Formkammer in einer Prozesskammer einer additiven Fertigungseinrichtung.

Die Aufgabe wird durch eine Anlage gemäß Anspruch 1 gelöst. Die hierzu abhängigen Ansprüche betreffen mögliche Ausführungsformen der Anlage.

Die Erfindung ist durch die beigefügten Ansprüche definiert. Die hierin beschriebene Anlage ("Anlage") dient zur additiven Herstellung dreidimensionaler Objekte, d. h. beispielsweise technischer Bauteile bzw. technischer Bauteilgruppen. Die Anlage umfasst mehrere Arbeitsstationen, welche jeweils zur Durchführung wenigstens eines Arbeitsvorgangs im Rahmen der additiven Herstellung dreidimensionaler Objekte ("Objekte") eingerichtet sind. Entsprechende Arbeitsvorgänge im Rahmen der additiven Herstellung eines Objekts betreffen einerseits additive Arbeitsvorgänge, d. h. additive Bauvorgänge, in welchen tatsächlich ein additiver Aufbau eines Objekts, insbesondere durch sukzessives schichtweises selektives Belichten und damit einhergehendes sukzessives schichtweises selektives Verfestigen von Baumaterialschichten aus einem verfestigbaren Baumaterial vermittels eines Energiestrahls, erfolgt, sowie vor einem additiven Arbeits- bzw. Bauvorgang durchzuführende bzw. durchgeführte vorbereitende Arbeitsvorgänge, d. h. z. B. Reinigungs- und Inertisierungs- und Temperierungsvorgänge von Pulvermodulen, sowie nach einem additiven Arbeits- bzw. Bauvorgang durchzuführende bzw. durchgeführte nachbereitende Arbeitsvorgänge, d. h. z. B. Auspackvorgänge additiv hergestellter Objekte aus entsprechenden Pulvermodulen.

Eine zur Durchführung additiver Arbeitsvorgänge eingerichtete, auch als Prozessstation zu bezeichnende erste Arbeitsstation kann daher eine Vorrichtung ("Vorrichtung") zur additiven Herstellung von Objekten umfassen. Die Vorrichtung ist zur additiven Herstellung von Objekten, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Vorrichtung umfasst die zur Durchführung additiver Bauvorgänge typischerweise erforderlichen Funktionskomponenten. Hierzu zählen insbesondere eine Beschichtungseinrichtung, welche zur Ausbildung selektiv zu verfestigender Baumaterialschichten (in der Bauebene der Vorrichtung) eingerichtet ist, und eine Belichtungseinrichtung, welche zur selektiven Belichtung selektiv zu verfestigender Baumaterialschichten (in der Bauebene der Vorrichtung) eingerichtet ist. Die Beschichtungseinrichtung umfasst typischerweise mehrere Bestandteile, d. h. z. B. ein ein, insbesondere klingenförmiges, Beschichtungswerkzeug umfassendes Beschichtungselement sowie eine Führungseinrichtung zur Führung des Beschichtungselements entlang einer definierten Bewegungsbahn. Auch die Belichtungseinrichtung umfasst typischerweise mehrere Bestandteile, d. h. z. B. eine Strahlerzeugungseinrichtung zur Erzeugung eines Energie- bzw. Laserstrahls, eine Strahlablenkeinrichtung (Scannereinrichtung) zur Ablenkung eines von der Strahlerzeugungseinrichtung erzeugten Energie- bzw. Laserstrahls auf einen zu belichtenden Bereich einer selektiv zu verfestigenden Baumaterialschicht sowie diverse optische Elemente, wie z. B. Linsenelemente, Objektivelemente, etc. Die genannten Funktionskomponenten der Vorrichtung sind typischerweise an oder in einer, typischerweise inertisierbaren, Prozesskammer der Vorrichtung angeordnet oder ausgebildet.

Eine zur Durchführung nachbereitender Arbeitsvorgänge eingerichtete, auch als Nachbearbeitungsstation zu bezeichnende, optionale weitere (bzw. zweite) Arbeitsstation kann eine Vorrichtung zum Auspacken eines additiv hergestellten Objekts umfassen. Die Vorrichtung kann zum Auspacken eines additiv hergestellten Objekts durch Entfernen des das additive hergestellte Objekte umgebenden, typischerweise nicht verfestigten, Baumaterials eingerichtet sein. Die Vorrichtung umfasst hier die zum Entfernen des das additive hergestellte Objekte umgebenden, typischerweise nicht verfestigten, Baumaterials erforderlichen Funktionskomponenten. Hierzu zählt insbesondere eine Saug- und/oder Gebläseeinrichtung, welche zur Erzeugung einer Saug- und/oder Gebläseströmung eingerichtet ist, vermittels welcher das zu entfernende Baumaterial abgesaugt oder abgeblasen werden kann.

Eine zur Durchführung vorbereitender Arbeitsvorgänge eingerichtete, auch als Vorbereitungsstation zu bezeichnende, optionale weitere (bzw. dritte) Arbeitsstation kann eine Vorrichtung zum Reinigen und/oder Inertisieren und/oder Temperieren von Pulvermodulen umfassen. Die Vorrichtung kann zum Reinigen und/oder Inertisieren und/oder Temperieren von Pulvermodulen eingerichtet sein. Die Vorrichtung umfasst hier die zum Reinigen und/oder Inertisieren und/oder Temperieren von Pulvermodulen erforderlichen Funktionskomponenten. Hierzu zählt insbesondere eine Reinigungseinrichtung, welche z. B. zur Erzeugung einer eine pulvermodulseitig umfasste Pulverkammer reinigenden Reinigungsströmung eingerichtet ist, bzw. eine Inertisierungseinrichtung, welche zur Erzeugung einer eine pulvermodulseitig umfasste Pulverkammer inertisierende Inertgasströmung eingerichtet ist, bzw. eine Temperiereinrichtung, welche zur Temperierung eines Pulvermoduls auf eine bestimmte Zieltemperatur eingerichtet ist.

Unabhängig von ihrer konkreten funktionellen Ausführung umfassen jeweilige Arbeitsstationen typischerweise eine eigene Gehäusekonstruktion, an oder in welcher die Funktionskomponenten der jeweiligen Arbeitsstation angeordnet oder ausgebildet sind. Die Arbeitsstationen sind sonach als gesonderte, durch jeweilige Gehäusekonstruktionen räumlich-körperlich definierte Funktionseinheiten der Anlage zu sehen, welche in diversen Konfigurationen relativ zueinander, z. B. in einem oder mehreren Gebäude(abschnitte)n, insbesondere Fabrikhallen, positionierbar sind.

Die Anlage umfasst typischerweise eine Mehrzahl an im Rahmen der additiven Herstellung dreidimensionaler Objekte verwendeter Pulvermodule. Ein jeweiliges Pulvermodul ist zur Aufnahme und/oder Abgabe von Baumaterial eingerichtet und umfasst hierfür typischerweise eine Pulverkammer. Die Pulverkammer begrenzt einen mit Baumaterial befüllbaren Pulverraum. Der Pulverraum ist zumindest seitlich durch Wandungen (Pulverkammerwandungen) der in der Regel hohlquaderartig bzw. hohlzylinderartig ausgebildeten Pulverkammer begrenzt. Bodenseitig ist der Pulverraum durch eine Trägereinrichtung begrenzt. Die Trägereinrichtung ist typischerweise zwischen zwei Endstellungen, d. h. zwischen einer (bezogen auf die Höhe des Pulvermoduls) oberen und einer unteren Endstellung, relativ zu der Pulverkammer bewegbar gelagert. Die bewegbare Lagerung der Trägereinrichtung ermöglicht die Realisierung einer, insbesondere linearen, Bewegung der Trägereinrichtung entlang einer vertikalen Bewegungsachse bzw. in einer vertikalen Bewegungsrichtung. Die bewegbare Lagerung der Trägereinrichtung ist typischerweise durch eine mit dieser gekoppelte, insbesondere (elektro)motorische, Antriebs- und/oder Aktoreinrichtung realisiert.

Konkret kann es sich bei einem Pulvermodul um ein Baumodul, in welchem der eigentliche additive Aufbau von Objekten erfolgt und welches hierfür im Rahmen der Durchführung additiver Bauvorgänge sukzessive schichtweise mit selektiv zu verfestigendem Baumaterial befüllt wird, oder um ein Dosiermodul, über welches im Rahmen der Durchführung additiver Bauvorgänge Baumaterial in die Prozesskammer dosiert wird, oder um ein Auffang- bzw. Überlaufmodul, welches im Rahmen der Durchführung additiver Bauvorgänge mit nicht verfestigtem Baumaterial befüllt wird, handeln.

Die Anlage umfasst weiter wenigstens eine, typischerweise mehrere, frei positionierbare mobile Lagereinheit(en) und wenigstens eine, typischerweise mehrere, fahrerlose frei bewegbare mobile Fördereinheit(en). Wie sich im Weiteren ergibt, kann durch das Zusammenwirken einer Lagereinheit und einer Fördereinheit ein modulares Beförderungs- und Lagersystem, welches ein gleichzeitiges Lagern und Befördern von Pulvermodul ermöglicht, realisiert werden.

Eine jeweilige Lagereinheit umfasst wenigstens eine regalartige Lagereinrichtung. Die Lagereinrichtung umfasst wenigstens einen Lagerraum, welcher zur Lagerung wenigstens eines Pulvermoduls, insbesondere zum Zwecke der Beförderung des Pulvermoduls zwischen unterschiedlichen Arbeitsstationen der Anlage, eingerichtet ist. Der Lagerraum ist durch eine die äußere Gestalt der Lagereinheit definierende, mehrere, insbesondere wandungsartige, Rahmenstrukturabschnitte umfassende Rahmenstruktur gebildet. Die Rahmenstruktur umfasst erste Rahmenstrukturabschnitte, welche den Lagerraum begrenzen, und zweite Rahmenstrukturabschnitte, über welche sich die Lagereinheit auf einem Untergrund abstellen lässt. Jeweilige erste Rahmenstrukturabschnitte können den Lagerraum insbesondere bodenseitig, seitlich und deckenseitig begrenzen. Die ersten Rahmenstrukturabschnitte definieren auch wenigstens eine Zugangsöffnung, über welche Pulvermodule in und aus dem Lagerraum bewegt werden können. Jeweilige zweite Rahmenstrukturabschnitte können fußartig, d. h. insbesondere als Füße, ausgebildet sein, sodass diese ein stabiles Abstellen der Lagereinheit auf einem Untergrund ermöglichen.

Eine jeweilige Fördereinheit umfasst wenigstens eine Aufnahmeeinrichtung. Die Aufnahmeeinrichtung ist zur Aufnahme wenigstens einer mobilen Lagereinheit zum Zwecke der Beförderung der Lagereinheit zwischen unterschiedlichen Arbeitsstationen der Anlage eingerichtet. Eine jeweilige Fördereinheit umfasst typischerweise wenigstens eine über einen Energiespeicher, d. h. z. B. eine Batterie, mit Energie versorgbare, insbesondere (elektro)motorische, Antriebseinrichtung, welche zur Erzeugung einer Antriebskraft eingerichtet ist, und eine mit der Antriebseinrichtung gekoppelte Kraftübertragungseinrichtung, welche zur Übertragung der von der Antriebseinrichtung erzeugten Antriebskraft auf einen Untergrund zur Erzeugung einer Bewegung der Fördereinheit relativ zu dem Untergrund eingerichtet ist. Die Kraftübertragungseinrichtung kann konkret eine Anzahl an z. B. Räder, Rollen oder Ketten umfasst, über welche sich die Übertragung der von der Antriebseinrichtung erzeugten Antriebskraft auf einen Untergrund zur Erzeugung einer Bewegung der Fördereinheit relativ zu dem Untergrund realisieren lässt.

Eine jeweilige Fördereinheit ist in unterschiedlichen, d. h. insbesondere in beliebig konfigurierbaren, Bewegungsbahnen automatisiert bewegbar. Die Konfiguration jeweiliger Bewegungsbahnen kann in einer Steuereinrichtung einer jeweiligen Fördereinheit fest definiert sein und kann sich über entsprechende, z. B. per Funk, an die Fördereinheit übertragene Steuerinformationen verändern lassen. Zur Übertragung, d. h. insbesondere zum Empfang, entsprechender Steuerinformationen kann eine Fördereinheit mit geeigneten, insbesondere funkbasierten, Kommunikationsschnittstellen ausgestattet sein. Entsprechende Kommunikationsschnittstellen können insbesondere auch eine Kommunikation von Fördereinheiten untereinander ermöglichen; eine entsprechende Kommunikation beinhaltet insbesondere den, insbesondere bidirektionalen, Austausch von eine aktuelle oder künftige Bewegung bzw. Positionierung einer Fördereinheit betreffenden Bewegungs- und/oder Positionsinformationen.

An entsprechenden ersten Rahmenstrukturabschnitten ist eine Halterungseinrichtung angeordnet oder ausgebildet, welche zur Halterung wenigstens eines Pulvermoduls in dem Lagerraum eingerichtet ist. Die Halterungseinrichtung kann eingerichtet sein, ein Pulvermodul bewegbar relativ zu der Rahmenstruktur zu haltern, wofür die Halterungseinrichtung Lagerelemente, welche eine bewegbare Lagerung eines in der Halterungseinrichtung angeordneten Pulvermoduls relativ zu der Rahmenstruktur ermöglichen, umfasst.

Bei entsprechenden Lagerelementen kann es sich z. B. um Gleit- oder Rollenlagerelemente handeln, welche unter Ausbildung einer bewegbaren Lagerung mit einem Pulvermodul zusammenwirken, d. h. z. B. in hierfür pulvermodulseitig vorgesehene, z. B. durch pulvermodulseitig vorhandene Ausnehmungen gebildete, Wirkabschnitte eingreifen.

Ein den Boden des Lagerraums begrenzender erster Rahmenstrukturabschnitt der Rahmenstruktur ist beabstandet von einem Untergrund angeordnet oder ausgebildet, sodass zwischen der dem Untergrund zugewandten Fläche des ersten Rahmenstrukturabschnitts und dem Untergrund ein Freiraum gebildet ist. Die Fördereinheit kann, insbesondere im Hinblick auf ihre Höhenabmessung, so bemessen sein, dass diese in den Freiraum unter den den Boden des Lagerraums begrenzenden ersten Rahmenstrukturabschnitt bewegbar ist. Durch eine Bewegung der Fördereinheit in den Freiraum, d. h. unter den den Boden des Lagerraums begrenzenden ersten Rahmenstrukturabschnitt, kann eine Aufnahmeposition definiert sein, in welcher die Fördereinheit die Lagereinheit aufnehmen kann.

Die Aufnahmeeinrichtung kann wenigstens ein mit einer Hubeinrichtung gekoppeltes, z. B. plattenartiges bzw. -förmiges, Aufnahmeelement umfassen. Das Aufnahmeelement ist zwischen wenigstens einer, d. h. gegebenenfalls auch mehreren, oberen Position(en), in welcher das Aufnahmeelement eingerichtet ist, derart an einer Lagereinheit, insbesondere an einem einen Boden des Lagerraums begrenzenden ersten Rahmenstrukturabschnitt, anzugreifen, dass die Lagereinheit von einem Untergrund abhebbar bzw. abgehoben ist, und einer unteren Position, in welcher das Aufnahmeelement nicht eingerichtet ist, derart an einer Lagereinheit, insbesondere an einem einen Boden des Lagerraums begrenzenden ersten Rahmenstrukturabschnitt anzugreifen, dass die Lagereinheit von einem Untergrund abhebbar bzw. abgehoben ist, bewegbar gelagert. Die Hubeinrichtung kann einen, insbesondere (elektro)motorischen, Hubantrieb, d. h. z. B. einen Hubspindel- oder einen Hubzylinderantrieb, umfassen, welcher zur Erzeugung einer Hubkraft zur Bewegung des Aufnahmeelements in die jeweiligen Positionen eingerichtet ist.

Eine jeweilige Arbeitsstation umfasst wenigstens eine Übergabeschnittstelle , über welche ein Pulvermodul von der Arbeitsstation an die Lagereinheit oder ein Pulvermodul von der Lagereinheit an die Arbeitsstation übergebbar ist, d. h. übergeben werden kann.

Eine jeweilige Fördereinheit kann (automatisiert) in eine definierte Andockposition bewegbar sein, in welcher die Fördereinheit derart relativ zu der Übergabeschnittstelle bewegt ist, dass ein Pulvermodul von der Arbeitsstation in den Lagerraum einer auf der Fördereinheit aufgenommenen Lagereinheit übergebbar ist. Eine jeweilige Fördereinheit ist in der Andockposition typischerweise unmittelbar an die die bzw. gegen die die Übergabeschnittstelle aufweisende (freiliegende) Außenfläche der Gehäusekonstruktion der jeweiligen Arbeitsstation bewegt.

Die Übergabeschnittstelle kann über eine Verschlusseinrichtung verschließbar sein. Die Verschlusseinrichtung kann ein Verschlusselement umfassen, welches zwischen einer Offenstellung, in welcher die Übergabeschnittstelle zur Übergabe eines Pulvermoduls aus der Arbeitsstation in einen Lagerraum einer Lagereinheit oder zur Übergabe eines Pulvermoduls aus dem Lagerraum einer Lagereinheit in die Arbeitsstation freigegeben ist, und einer Schließstellung, in welcher die Übergabeschnittstelle zur Übergabe eines Pulvermoduls aus der Arbeitsstation in einen Lagerraum einer Lagereinheit oder zur Übergabe eines Pulvermoduls aus dem Lagerraum einer Lagereinheit in die Arbeitsstation nicht freigegeben ist, bewegbar gelagert sein. Ein Bewegen des Verschlusselements in die Offen- bzw. in die Schließstellung, oder umgekehrt, kann automatisiert in Abhängigkeit der Erfassung einer Bewegung einer Fördereinheit in die Andockposition bzw. in Abhängigkeit die Erfassung einer in die Andockposition bewegten Fördereinheit erfolgen. Die Erfassung der Bewegung einer Fördereinheit in die Andockposition bzw. die Erfassung einer in die Andockposition bewegten Fördereinheit kann durch eine geeignete Erfassungseinrichtung realisiert sein. Die Erfassungseinrichtung kann z. B. eine Näherungs- oder Kontaktsensorik umfassen, über welche sich eine Bewegung einer Fördereinheit in die Andockposition bzw. eine in die Andockposition bewegte Fördereinheit erfassen lässt.

Eine jeweilige Arbeitsstation kann eine Gehäusekonstruktion mit einer Halterungseinrichtung umfassen. Die Halterungseinrichtung kann eingerichtet sein, ein Pulvermodul entlang einer sich durch die Arbeitsstation erstreckenden Transportbahn bewegbar relativ zu der Gehäusekonstruktion zu haltern, wofür die Halterungseinrichtung Lagerelemente, welche eine bewegbare Lagerung eines in der Halterungseinrichtung angeordneten Pulvermoduls relativ zu der Gehäusekonstruktion ermöglichen, umfasst. Bei entsprechenden Lagerelementen kann es sich wiederum z. B. um Gleit- oder Rollenlagerelemente handeln, welche unter Ausbildung einer bewegbaren Lagerung mit einem Pulvermodul zusammenwirken, d. h. z. B. in hierfür pulvermodulseitig vorgesehene, z. B. durch pulvermodulseitig vorhandene Ausnehmungen gebildete, Wirkabschnitte eingreifen. Die Arbeitsstation kann eine mit der Halterungseinrichtung zusammenwirkende Antriebseinrichtung umfassen, über welche sich eine ein Pulvermodul entlang der Transportbahn bewegende Antriebskraft erzeugen lässt.

Jeweilige Halterungseinrichtungen der Arbeitsstationen und jeweilige Halterungseinrichtungen der Lagereinheiten, insbesondere jeweiliger auf einer Fördereinheit aufgenommener Lagereinheiten, fluchten zweckmäßig miteinander, sodass sich eine sich zwischen Lagereinheit und Arbeitsstation erstreckende durchgehende Transportbahn ergibt, welche es ermöglicht, dass in jeweiligen Halterungseinrichtungen gehalterte Pulvermodule problemlos von einer Arbeitsstation auf eine Lagereinheit, und umgekehrt, übergebbar sind.

Mit dem gleichen Zweck sind jeweilige Halterungseinrichtungen der Arbeitsstationen und jeweilige Halterungseinrichtungen der Lagereinheiten sind zweckmäßig standardisiert bzw. identisch ausgebildet.

Die Erfindung ist anhand von Ausführungsbeispielen in den Zeichnungsfiguren näher erläutert. Dabei zeigt:
- Fig. 1: eine Prinzipdarstellung einer Fördereinheit und einer Lagereinheit einer Anlage zur additiven Herstellung dreidimensionaler Objekte gemäß einem Ausführungsbeispiel; und
- Fig. 2: eine Prinzipdarstellung eines Ausschnitts aus einer Anlage zur additiven Herstellung dreidimensionaler Objekte gemäß einem Ausführungsbeispiel.

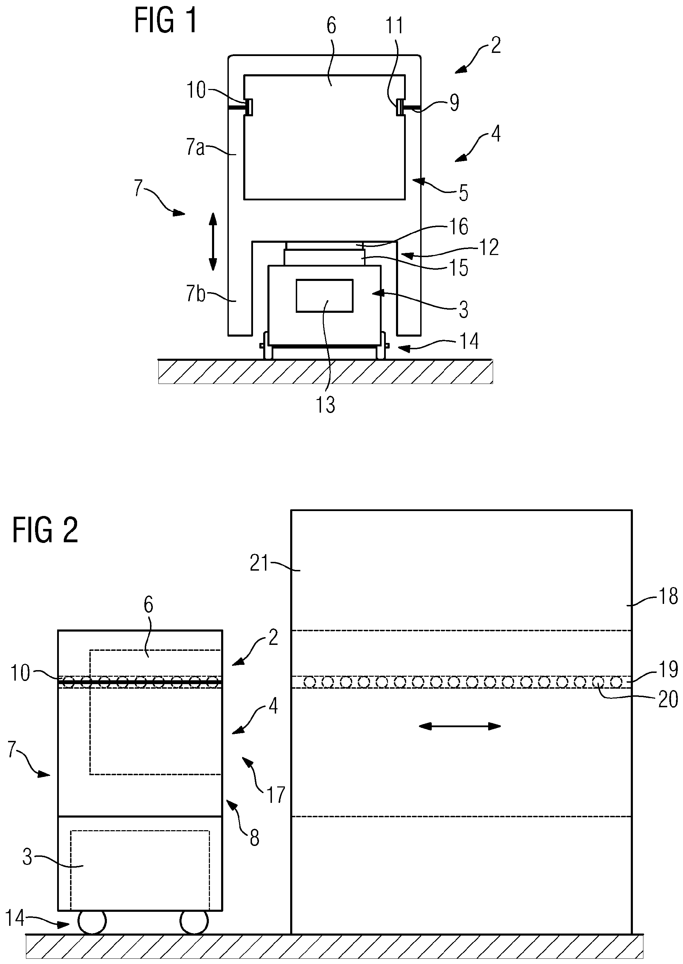

Fig. 1 zeigt eine Prinzipdarstellung einer fahrerlosen mobilen Fördereinheit 3 und einer frei positionierbaren mobilen Lagereinheit 2 einer Anlage 1 zur additiven Herstellung dreidimensionaler Objekte gemäß einem Ausführungsbeispiel.

Die Lagereinheit 2 umfasst eine regalartige Lagereinrichtung 4, welche einen Lagerraum 5, welcher zur Lagerung wenigstens eines Pulvermoduls 6, d. h. z. B. eines Baumoduls, insbesondere zum Zwecke der Beförderung des Pulvermoduls 6 zwischen unterschiedlichen Arbeitsstationen 21 der Anlage 1, eingerichtet ist. Der Lagerraum 5 ist durch eine die äußere Gestalt der Lagereinheit 2 definierende, mehrere, insbesondere wandungsartige, Rahmenstrukturabschnitte 7a, 7b umfassende Rahmenstruktur 7 gebildet. Die Rahmenstruktur 7 umfasst erste Rahmenstrukturabschnitte 7a, welche den Lagerraum 5 begrenzen, und zweite Rahmenstrukturabschnitte 7b, über welche sich die Lagereinheit 2 auf einem Untergrund abstellen lässt. Die ersten Rahmenstrukturabschnitte 7a begrenzen den Lagerraum 5 bodenseitig, seitlich und deckenseitig. Die ersten Rahmenstrukturabschnitte 7a definieren auch wenigstens eine Zugangsöffnung 8, über welche Pulvermodule 6 in und aus dem Lagerraum 5 bewegt werden können. Jeweilige zweite Rahmenstrukturabschnitte können fußartig, d. h. insbesondere als Füße, ausgebildet sein, sodass diese ein stabiles Abstellen der Lagereinheit 2 auf einem Untergrund ermöglichen.

Ein den Boden des Lagerraums 5 begrenzender erster Rahmenstrukturabschnitt 7a der Rahmenstruktur 7 ist beabstandet von dem Untergrund angeordnet, sodass zwischen der dem Untergrund zugewandten Fläche des ersten Rahmenstrukturabschnitts 7a und dem Untergrund ein Freiraum gebildet ist.

An den ersten Rahmenstrukturabschnitten 7a, d. h. an den dem Lagerraum 5 zugewandten Innenseiten der Rahmenstrukturabschnitte 7a, ist eine Halterungseinrichtung 9 angeordnet oder ausgebildet, welche zur Halterung eines Pulvermoduls 6 in dem Lagerraum 5 eingerichtet ist. Die Halterungseinrichtung 9 ist eingerichtet, das Pulvermodul 6 bewegbar relativ zu der Rahmenstruktur 7 zu haltern, wofür die Halterungseinrichtung 9 Lagerelemente 10, welche eine bewegbare Lagerung eines in der Halterungseinrichtung 9 angeordneten Pulvermoduls 6 relativ zu der Rahmenstruktur 7 ermöglichen, umfasst. Bei den Lagerelementen 10 kann es sich z. B. um Gleit- oder Rollenlagerelemente handeln, welche unter Ausbildung einer bewegbaren Lagerung mit einem Pulvermodul 6 zusammenwirken, d. h. in hierfür pulvermodulseitig vorgesehene, durch pulvermodulseitig vorhandene Ausnehmungen 11 gebildete, Wirkabschnitte eingreifen. Die Wirkabschnitte erstrecken sich zumindest abschnittsweise entlang zweier gegenüber liegend angeordneter Wandungsabschnitte des Pulvermoduls 6.

Die Fördereinheit 3 umfasst eine Aufnahmeeinrichtung 12, welche zur Aufnahme einer mobilen Lagereinheit 2 zum Zwecke der Beförderung der Lagereinheit 2 zwischen unterschiedlichen Arbeitsstationen 21 der Anlage 1 eingerichtet. Die Fördereinheit 3 umfasst eine, insbesondere (elektro)motorische, Antriebseinrichtung 13, welche zur Erzeugung einer Antriebskraft eingerichtet ist, und eine mit der Antriebseinrichtung 13 gekoppelte Kraftübertragungseinrichtung 14, welche zur Übertragung der von der Antriebseinrichtung 13 erzeugten Antriebskraft auf einen Untergrund zur Erzeugung einer Bewegung der Fördereinheit 3 relativ zu dem Untergrund eingerichtet ist. Die Kraftübertragungseinrichtung 14 umfasst eine Anzahl an Rädern, Rollen oder Ketten, über welche sich eine Übertragung der Antriebskraft auf den Untergrund realisieren lässt.

Anhand der Fig. ist ersichtlich, dass die Fördereinheit 3, insbesondere im Hinblick auf ihre Höhenabmessung, so bemessen ist, dass diese in den Freiraum unter den den Boden des Lagerraums 5 begrenzenden ersten Rahmenstrukturabschnitt 7a bewegbar ist. Durch eine Bewegung der Fördereinheit 3 in den Freiraum, d. h. unter den den Boden des Lagerraums 5 begrenzenden ersten Rahmenstrukturabschnitt 7a, ist eine in den Fig. gezeigte Aufnahmeposition definiert, in welcher die Fördereinheit 3 die Lagereinheit 2 aufnehmen kann.

Die Aufnahmeeinrichtung 12 umfasst ein mit einer Hubeinrichtung 15 gekoppeltes, z. B. plattenartiges bzw. -förmiges, Aufnahmeelement 16. Die Hubeinrichtung 15 umfasst einen, insbesondere (elektro)motorischen, Hubantrieb (nicht gezeigt), d. h. z. B. einen Hubspindel- oder einen Hubzylinderantrieb, umfassen, welcher zur Erzeugung einer Hubkraft zur Bewegung des Aufnahmeelements 16 eingerichtet ist. Das Aufnahmeelement 16 ist vermittels der Hubeinrichtung 15 zwischen wenigstens einer, d. h. gegebenenfalls auch mehreren, oberen Position(en), in welcher das Aufnahmeelement 16 eingerichtet ist, derart an der Lagereinheit 2, d. h. insbesondere an dem den Boden des Lagerraums 5 begrenzenden ersten Rahmenstrukturabschnitt 7a, anzugreifen, dass die Lagereinheit 2 von dem Untergrund abhebbar bzw. abgehoben ist, und einer unteren Position, in welcher das Aufnahmeelement 16 nicht eingerichtet ist, derart an der Lagereinheit 2, insbesondere an dem den Boden des Lagerraums 5 begrenzenden ersten Rahmenstrukturabschnitt 7a anzugreift, dass die Lagereinheit 2 von dem Untergrund abgehoben ist, bewegbar gelagert.

Die Fördereinheit 3 ist in unterschiedlichen, d. h. insbesondere in beliebig konfigurierbaren, Bewegungsbahnen automatisiert bewegbar. Die Konfiguration jeweiliger Bewegungsbahnen kann in einer Steuereinrichtung (nicht gezeigt) einer jeweiligen Fördereinheit 3 fest definiert sein und kann sich über entsprechende, z. B. per Funk, an die Fördereinheit 3 übertragene Steuerinformationen verändern lassen. Zur Übertragung, d. h. insbesondere zum Empfang, entsprechender Steuerinformationen ist die Fördereinheit 3 mit geeigneten, insbesondere funkbasierten, Kommunikationsschnittstellen (nicht gezeigt) ausgestattet. Entsprechende Kommunikationsschnittstellen können auch eine Kommunikation von Fördereinheiten 3 untereinander ermöglichen; eine entsprechende Kommunikation beinhaltet insbesondere den, insbesondere bidirektionalen, Austausch von eine aktuelle oder künftige Bewegung bzw. Positionierung einer Fördereinheit 3 betreffenden Bewegungs- und/oder Positionsinformationen.

Fig. 2 zeigt eine Prinzipdarstellung eines Ausschnitts aus einer Anlage 1 zur additiven Herstellung dreidimensionaler Objekte gemäß einem Ausführungsbeispiel.

Die Anlage 1 umfasst, wenngleich in Fig. 2 nur eine einzige Arbeitsstation 21 gezeigt ist, mehrere Arbeitsstationen 21, d. h. z. B. zur Durchführung additiver Arbeitsvorgänge eingerichtete Prozessstationen, in welchen eine Vorrichtung zur additiven Herstellung dreidimensionaler Objekte angeordnet oder ausgebildet ist.

Die Arbeitsstation 21 umfasst eine Gehäusekonstruktion 18 mit einer Halterungseinrichtung 19, welche eingerichtet ist, ein Pulvermodul 6 entlang einer sich durch die Arbeitsstation 21 erstreckenden Transportbahn (vgl. Doppelpfeil) bewegbar relativ zu der Gehäusekonstruktion 18 zu haltern. Die Halterungseinrichtung 19 ist hierfür mit Lagerelementen 20, welche eine bewegbare Lagerung eines in der Halterungseinrichtung 19 angeordneten Pulvermoduls 6 relativ zu der Gehäusekonstruktion 18 ermöglichen, ausgestattet. Bei entsprechenden Lagerelementen 20 kann es sich wiederum z. B. um Gleit- oder Rollenlagerelemente handeln, welche unter Ausbildung einer bewegbaren Lagerung mit einem Pulvermodul 6 zusammenwirken, d. h. in die hierfür pulvermodulseitig vorgesehenen, z. B. durch pulvermodulseitig vorhandene Ausnehmungen 11 gebildete, Wirkabschnitte eingreifen. Die Arbeitsstation 21 kann eine mit der Halterungseinrichtung 19 zusammenwirkende Antriebseinrichtung (nicht gezeigt) umfassen, über welche sich eine ein Pulvermodul 6 entlang der Transportbahn bewegende Antriebskraft erzeugen lässt.

Anhand von Fig. 2 ist ersichtlich, dass jeweilige Halterungseinrichtungen 19 der Arbeitsstationen 21 und jeweilige Halterungseinrichtungen 9 der Lagereinheiten 2, insbesondere jeweiliger auf einer Fördereinheit 3 aufgenommener Lagereinheiten 2, miteinander fluchten, sodass sich eine sich zwischen Lagereinheit 2 und Arbeitsstation 21 erstreckende durchgehende Transportbahn ergibt, welche es ermöglicht, dass in jeweiligen Halterungseinrichtungen 9, 19 gehalterte Pulvermodule 6 problemlos von einer Arbeitsstation 21 auf eine Lagereinheit 2, und umgekehrt, übergebbar sind.

Die Arbeitsstation 21 umfasst wenigstens eine Übergabeschnittstelle 17, über welche ein Pulvermodul 6 von der Arbeitsstation 21 an die Lagereinheit 2 oder - wie in Fig. 2 dargestellt - ein Pulvermodul 6 von der Lagereinheit 2 an die Arbeitsstation 21 übergebbar ist, d. h. übergeben werden kann.

Eine jeweilige Fördereinheit 3 kann (automatisiert) in eine definierte Andockposition bewegbar sein, in welcher die Fördereinheit 3 derart relativ zu der Übergabeschnittstelle 17 de Arbeitsstation 21 bewegt ist, dass ein Pulvermodul 6 von der Arbeitsstation 21 in den Lagerraum 5 der auf der Fördereinheit 3 aufgenommenen Lagereinheit 2, oder umgekehrt von dem Lagerraum 5 der auf der Fördereinheit 3 aufgenommenen Lagereinheit 2 in die Arbeitsstation 21 übergebbar ist. Wie in Fig. 2 dargestellt, ist eine jeweilige Fördereinheit 3in der Andockposition unmittelbar an die die bzw. gegen die die Übergabeschnittstelle 17 aufweisende (freiliegende) Außenfläche der Gehäusekonstruktion 18 der jeweiligen Arbeitsstation 21 bewegt.

Die Übergabeschnittstelle 17 der Arbeitsstation kann über eine Verschlusseinrichtung (nicht gezeigt) verschließbar sein. Die Verschlusseinrichtung kann ein Verschlusselement umfassen, welches zwischen einer Offenstellung, in welcher die Übergabeschnittstelle 17 zur Übergabe eines Pulvermoduls 6 aus der Arbeitsstation 21 in einen Lagerraum 5 einer Lagereinheit 2 oder zur Übergabe eines Pulvermoduls 6 aus dem Lagerraum 5 einer Lagereinheit 2 in die Arbeitsstation 21 freigegeben ist, und einer Schließstellung, in welcher die Übergabeschnittstelle 17 nicht zur Übergabe eines Pulvermoduls 6 aus der Arbeitsstation 21 in einen Lagerraum 5 einer Lagereinheit 2 oder zur Übergabe eines Pulvermoduls 6 aus dem Lagerraum 5 einer Lagereinheit 2 in die Arbeitsstation 21 freigegeben ist, bewegbar gelagert sein. Ein Bewegen des Verschlusselements in die Offen- bzw. in die Schließstellung, oder umgekehrt, kann automatisiert in Abhängigkeit der Erfassung einer Bewegung einer Fördereinheit 3 in die Andockposition bzw. in Abhängigkeit die Erfassung einer in die Andockposition bewegten Fördereinheit 3 erfolgen. Die Erfassung der Bewegung einer Fördereinheit 3 in die Andockposition bzw. die Erfassung einer in die Andockposition bewegten Fördereinheit 3 kann durch eine geeignete Erfassungseinrichtung (nicht gezeigt) realisiert sein. Die Erfassungseinrichtung kann z. B. eine Näherungs- oder Kontaktsensorik umfassen, über welche sich eine Bewegung einer Fördereinheit 3 in die Andockposition bzw. eine in die Andockposition bewegte Fördereinheit 3 erfassen lässt.

Durch das beschriebene Zusammenwirken der Lagereinheit 2 und der Fördereinheit 3 ist ein modulares Beförderungs- und Lagersystem realisiert, welches ein gleichzeitiges Lagern und Befördern von Pulvermodulen 6 ermöglicht.

## Patentansprüche

1. Anlage (1) zur additiven Herstellung dreidimensionaler Objekte, umfassend eine oder mehrere Arbeitsstationen (21), welche zur Durchführung wenigstens eines Arbeitsvorgangs im Rahmen der additiven Herstellung dreidimensionaler Objekte eingerichtet sind, **gekennzeichnet durch**
wenigstens eine frei positionierbare mobile Lagereinheit (2), welche eine regalartige Lagereinrichtung (4) umfasst, welche wenigstens einen Lagerraum (5) umfasst, welcher zur Lagerung wenigstens eines Pulvermoduls (6) zum Zwecke der Beförderung des Pulvermoduls (6) zwischen unterschiedlichen Arbeitsstationen (21) der Anlage (1), eingerichtet ist,
wenigstens eine fahrerlose frei bewegbare mobile Fördereinheit (3), welche eine Aufnahmeeinrichtung (12) umfasst, welche zur Aufnahme der wenigstens einen frei positionierbaren mobilen Lagereinheit (2) zum Zwecke der Beförderung der Lagereinheit (2) zwischen unterschiedlichen Arbeitsstationen (21) der Anlage (1) eingerichtet ist, wobei
der Lagerraum (5) der wenigstens einen frei positionierbaren mobilen Lagereinheit (2) durch eine die äußere Gestalt der Lagereinheit (2) definierende, mehrere Rahmenstrukturabschnitte (7a, 7b) umfassende Rahmenstruktur (7) gebildet ist, wobei die Rahmenstruktur (7) erste Rahmenstrukturabschnitte (7a) umfasst, welche den Lagerraum (5) begrenzen, und zweite Rahmenstrukturabschnitte (7b) umfasst, über welche sich die Lagereinheit (2) auf einem Untergrund abstellen lässt, wobei
an ersten Rahmenstrukturabschnitten (7a) eine Halterungseinrichtung (9) angeordnet oder ausgebildet ist, welche zur Halterung wenigstens eines Pulvermoduls (6) in dem Lagerraum (5) eingerichtet ist, wobei
ein den Boden des Lagerraums (5) begrenzender erster Rahmenstrukturabschnitt (7a) beabstandet von einem Untergrund angeordnet oder ausgebildet ist, sodass zwischen der dem Untergrund zugewandten Fläche des ersten Rahmenstrukturabschnitts (7a) und dem Untergrund ein Freiraum gebildet ist, wobei die Fördereinheit (3) so bemessen ist, dass diese in den Freiraum unter den den Boden des Lagerraums (5) begrenzenden ersten Rahmenstrukturabschnitt (7a) bewegbar ist, wobei
eine jeweilige Arbeitsstation (21) wenigstens eine Übergabeschnittstelle (17) umfasst, über welche ein Pulvermodul (6) von der Arbeitsstation (21) an die Lagereinheit (2) oder ein Pulvermodul (6) von der Lagereinheit (2) an die Arbeitsstation (21) übergebbar ist.

2. Anlage nach Anspruch 1, **dadurch gekennzeichnet, dass** die Halterungseinrichtung (9) eingerichtet ist, ein Pulvermodul (6) bewegbar relativ zu der Rahmenstruktur (7) zu haltern, wofür die Halterungseinrichtung (9) Lagerelemente (10), welche eine bewegbare Lagerung eines in der Halterungseinrichtung (9) angeordneten Pulvermoduls (6) relativ zu der Rahmenstruktur (7) ermöglichen, umfasst.

3. Anlage nach einem der vorhergehenden Ansprüche, **dadurch gekennzeichnet, dass** die Aufnahmeeinrichtung (12) wenigstens ein mit einer Hubeinrichtung (15) gekoppeltes Aufnahmeelement (16) umfasst, welches zwischen wenigstens einer oberen Position, in welcher das Aufnahmeelement (16) eingerichtet ist, derart an einer Lagereinheit (2) anzugreifen, dass die Lagereinheit (2) von einem Untergrund abgehoben ist, und einer unteren Position, in welcher das Aufnahmeelement (16) nicht eingerichtet ist, derart an einer Lagereinheit (2) anzugreifen, dass die Lagereinheit (2) von einem Untergrund abgehoben ist, bewegbar gelagert ist.

4. Anlage nach einem der vorhergehenden Ansprüche, **dadurch gekennzeichnet, dass** die Fördereinheit (3) in eine definierte Andockposition bewegbar ist, in welcher die Fördereinheit (3) derart relativ zu der Übergabeschnittstelle (21) bewegt ist, dass ein Pulvermodul (6) von der Arbeitsstation (21) in den Lagerraum (5) einer auf der Fördereinheit (3) aufgenommenen Lagereinheit (2), oder umgekehrt, übergebbar ist.

5. Anlage nach einem der vorhergehenden Ansprüche, **dadurch gekennzeichnet, dass** die Übergabeschnittstelle (17) über einer Verschlusseinrichtung verschließbar ist, wobei die Verschlusseinrichtung ein Verschlusselement umfasst, welches zwischen einer Offenstellung, in welcher die Übergabeschnittstelle (17) zur Übergabe eines Pulvermoduls (6) aus der Arbeitsstation (21) in einen Lagerraum (5) einer Lagereinheit (2) oder zur Übergabe eines Pulvermoduls (6) aus dem Lagerraum (5) einer Lagereinheit (2) in die Arbeitsstation (21) freigegeben ist, und einer Schließstellung, in welcher die Übergabeschnittstelle (17) zur Übergabe eines Pulvermoduls (6) aus der Arbeitsstation (21) in einen Lagerraum (5) einer Lagereinheit (2) oder zur Übergabe eines Pulvermoduls (6) aus dem Lagerraum (5) einer Lagereinheit (2) in die Arbeitsstation (21) nicht freigegeben ist, umfasst.

6. Anlage nach einem der vorhergehenden Ansprüche, **dadurch gekennzeichnet, dass** eine jeweilige Arbeitsstation (21) eine Gehäusekonstruktion (18) mit einer Halterungseinrichtung (19) umfasst, welche eingerichtet ist, ein Pulvermodul (6) entlang einer sich durch die Arbeitsstation (21) erstreckenden Transportbahn bewegbar relativ zu der Gehäusekonstruktion (18) zu haltern, wofür die Halterungseinrichtung (19) Lagerelemente (20), welche eine bewegbare Lagerung eines in der Halterungseinrichtung (19) angeordneten Pulvermoduls (6) relativ zu der Gehäusekonstruktion (18) ermöglichen, umfasst.

## Claims

1. Plant (1) for the additive production of three-dimensional objects, comprising one or more workstations (21), which are set up to carry out at least one work process in the context of the additive production of three-dimensional objects, **characterized by**
at least one freely positionable mobile storage unit (2), which comprises a shelf-like storage device (4), which comprises at least one storage room (5), which is equipped for storing at least one powder module (6) for the purpose of transporting the powder module (6) between different work stations (21) of the plant (1),
at least one driverless freely movable mobile conveying unit (3) comprising a receiving device (12) which is set up to accommodate the at least one freely positionable mobile storage unit (2) for the purpose of transporting the storage unit (2) between different work stations (21) of the installation (1), wherein
The storage space (5) of the at least one freely positionable mobile storage unit (2) is formed by a frame structure (7) defining the outer shape of the storage unit (2), comprising several frame structure sections (7a, 7b), wherein the frame structure (7) comprises first frame structure sections (7a), which limit the storage space (5), and second frame structure sections (7b), via which the storage unit (2) can be placed on a substrate, wherein
at first frame structure portions (7a) a mounting device (9) is arranged or formed, which is arranged for holding at least one powder module (6) in the storage space (5), wherein a first frame structure portion (7a) limiting the floor of the storage space (5) is spaced away from a substrate or formed so that a free space is formed between the surface facing the substrate of the first frame structure portion (7a) and the substrate, wherein the conveying unit (3) is dimensioned such that it is movable into the free space below the floor of the storage space (5) limiting first frame structure portion (7a), wherein
a respective workstation (21) comprises at least one transfer interface (17) via which a powder module (6) can be transferred from the workstation (21) to the storage unit (2) or a powder module (6) from the storage unit (2) to the workstation (21).

2. Plant according to claim 1, **characterized in that** the mounting device (9) is arranged to hold a powder module (6) movable relative to the frame structure (7), for which the mounting device (9) comprises bearing elements (10), which enable a movable storage of a powder module (6) arranged in the mounting device (9) relative to the frame structure (7).

3. Plant according to one of the preceding claims, **characterized in that** the receiving device (12) comprises at least one coupled to a lifting device (15) receiving element (16) which is mounted between at least one upper position in which the receiving element (16) is arranged to attack a bearing unit (2) in such a way that the bearing unit (2) is raised from a substrate, and a lower position in which the receiving element (16) is not arranged to attack a bearing unit (2) in such a way that the bearing unit (2) is raised from a substrate, movably mounted.

4. Plant according to one of the preceding claims, **characterized in that** the conveying unit (3) is movable in a defined docking position, in which the conveying unit (3) is moved so relative to the transfer interface (21) that a powder module (6) from the working station (21) into the storage space (5) of a storage unit (2) received on the conveying unit (3), or vice versa, is transferable.

5. Plant according to one of the preceding claims, **characterized in that** the transfer interface (17) can be closed via a closure means, wherein the closure means comprises a closure element which is released between an open position in which the transfer interface (17) for transferring a powder module (6) from the working station (21) to a storage room (5) of a storage unit (2) or for transferring a powder module (6) from the storage room (5) of a storage unit (2) to the working station (21) and a closing position in which the transfer interface (17) for transferring a powder module (6) from the working station (21) to a storage room (5) of a storage unit (2) or for transferring a powder module (6) from the storage room (5) of a storage unit (2) to the working station (21) is not released.

6. Plant according to one of the preceding claims, **characterized in that** a respective workstation (21) comprises a housing construction (18) with a mounting device (19) which is arranged to hold a powder module (6) along a transport path extending through the working station (21) movable relative to the housing construction (18), for which the mounting device (19) bearing elements (20) which enable a movable bearing of a powder module (6) arranged in the mounting device (19) relative to the housing construction (18), comprises.

## Revendications

1. Installation (1) pour la fabrication additive d'objets tridimensionnels comprenant un ou plusieurs postes de travail (21) aménagés pour effectuer au moins une opération dans le cadre de la fabrication additive d'objets tridimensionnels, **caractérisés par:**
au moins une unité mobile de stockage (2) librement positionnable comprenant une installation de stockage de type rayonnage (4) comprenant au moins un local de stockage (5) équipé pour le stockage d'au moins un module de poudre (6) aux fins du transport du module de poudre (6) entre différents postes de travail (21) de l'installation (1),
au moins une unité mobile transportable sans conducteur (3) comprenant une installation d'accueil (12) aménagée pour accueillir au moins une unité mobile de stockage (2) librement positionnable aux fins du transport de l'unité de stockage (2) entre différents postes de travail (21) de l'installation (1), étant entendu que:
l'espace de stockage (5) d'au moins une unité mobile de stockage (2) librement positionnable est constitué d'une structure de cadre (7) comprenant plusieurs sections de structure de cadre (7a, 7b) définissant la forme extérieure de l'unité de stockage (2), la structure de cadre (7) comprenant les premières sections de structure de cadre (7a) délimitant l'espace de stockage (5) et les deuxièmes sections de structure de cadre (7b) sur lesquelles l'unité de stockage (2) peut être placée sur un support, étant entendu que: sur les premières sections de la structure du cadre (7a), un dispositif de fixation (9) est disposé ou formé pour fixer au moins un module de poudre (6) dans le local de stockage (5), étant entendu que:
une première section de structure de cadre délimitant le sol de l'espace de stockage (5) (7a) est espacée d'un sous-sol ou formée de telle sorte qu'il y ait un espace libre entre la surface de la première section de structure de cadre (7a) faisant face au sous-sol et le sous-sol, l'unité de transport (3) étant dimensionnée de telle sorte que cette première section de structure de cadre délimitant l'espace libre sous le sol de l'espace de stockage (5) (7a) puisse être déplacée:
un poste de travail (21) comprend au moins une interface de transfert (17) permettant de transférer un module de poudre (6) du poste de travail (21) à l'unité de stockage (2) ou un module de poudre (6) de l'unité de stockage (2) au poste de travail (21).

2. Installation selon la revendication 1, **caractérisée en ce que** le support (9) est configuré pour fixer un module de poudre (6) mobile par rapport à la structure du cadre (7), pour lequel le support (9) comprend des éléments de roulement (10) permettant un stockage mobile d'un module de poudre (6) situé dans le support (9) par rapport à la structure du cadre (7).

3. Installation selon l'une quelconque des revendications précédentes, **caractérisée en ce que** l'installation d'accueil (12) comprend au moins un élément d'accueil (16) couplé à un dispositif de levage (15) qui, entre au moins une position supérieure dans laquelle l'élément d'accueil (16) est installé, doit être attaquable à une unité de stockage (2) de telle sorte que l'unité de stockage (2) est détachée d'un sous-sol et une position inférieure dans laquelle l'élément d'accueil (16) n'est pas installé, doit être attaquable à une unité de stockage (2) de telle sorte que l'unité de stockage (2) est détachée d'un sous-sol.

4. Installation selon l'une quelconque des revendications précédentes, **caractérisée en ce que** l'unité de transport (3) peut être déplacée dans une position d'amarrage définie dans laquelle l'unité de transport (3) est déplacée par rapport à l'interface de transfert (21) de telle sorte qu'un module de poudre (6) peut être transféré du poste de travail (21) dans le local de stockage (5) d'une unité de stockage (2) prise sur l'unité de transport (3), ou vice versa.

5. Installation selon l'une quelconque des revendications précédentes, **caractérisée en ce que** l'interface de transfert (17) est verrouillable au-dessus d'un dispositif de fermeture, le dispositif de fermeture comprenant un élément de fermeture qui est libéré entre une position ouverte dans laquelle l'interface de transfert (17) est libérée pour transférer un module de poudre (6) du poste de travail (21) vers un local de stockage (5) d'une unité de stockage (2) ou pour transférer un module de poudre (6) du local de stockage (5) d'une unité de stockage (2) vers le poste de travail (21) et une position de fermeture dans laquelle l'interface de transfert (17) n'est pas libérée pour transférer un module de poudre (6) du poste de travail (21) vers un local de stockage (5) d'une unité de stockage (2) ou pour transférer un module de poudre (6) du local de stockage (5) d'une unité de stockage (2) vers le poste de travail (21).

6. Installation selon l'une quelconque des revendications précédentes, **caractérisée en ce qu'une** station de travail respective (21) comprend une construction de boîtier (18) avec un dispositif de support (19) qui est aménagée pour fixer un module de poudre (6) le long d'une voie de transport s'étendant à travers la station de travail (21) de manière mobile par rapport à la construction de boîtier (18), pour laquelle le dispositif de support (19) comprend des éléments de roulement (20) qui permettent un stockage mobile d'un module de poudre (6) situé dans le dispositif de support (19) par rapport à la construction de boîtier (18).
